# EUROPEAN PATENT SPECIFICATION

(11) **EP 3 605 135 B1**
(45) Date of publication and mention of the grant of the patent: **13.05.2020**
(21) Application number: 18425063.7
(22) Date of filing: 02.08.2018
(51) Int. Cl.: G01S 7/40, G01S 7/35, G01S 13/87, G01S 13/06, G01S 13/34, G01S 13/88

(54) **MONITORING DEVICE AND METHOD FOR MONITORING A SAFETY ZONE**
ÜBERWACHUNGSVORRICHTUNG UND VERFAHREN ZUR ÜBERWACHUNG EINER SICHERHEITSZONE
DISPOSITIF DE SURVEILLANCE ET PROCÉDÉ DE SURVEILLANCE D'UNE ZONE DE SÉCURITÉ

(43) Date of publication of application: 05.02.2020
(73) Proprietor: Omron Europe B.V., 2132 JD Hoofddorp (NL)
(72) Inventor: Hendrik, Beijeman, 8111NZ Heeten (NL); Grange, Gianmarco, 10046 Poirino TO (IT)
(74) Representative: Horn Kleimann Waitzhofer Patentanwälte PartG mbB

(56) References cited:
- EP-A1- 2 755 044
- EP-A1- 3 252 364
- DE-A1-102006 049 879
- US-A1- 2015 168 546

## Description

The present invention relates to a monitoring device for monitoring a safety zone. Further, the present invention relates to a method for monitoring a safety zone. Safety zones can for example be protected using a monitoring device including a radar device. The radar device can be used to detect the presence of an object in the safety zone and to detect other useful properties of the object. If a failure of the radar device remains unnoticed, the safety of the safety zone can be compromised.

EP 3 252 364 A1 discloses a radar apparatus forming a linear barrier to protect a secure area. The radar apparatus comprises a plurality of monostatic radar sensors arranged along a straight line.

Further, document EP 2 755 044 A1 discloses a frequency modulated continuous wave (FMCW) radar device provided with a self-testing functionality. In the self-testing, a transmission signal comprising an object detection signal and a self-test signal superimposed on the object detection signal is transmitted. The self-test signal represents a virtual target. At reception, presence of the virtual target in the received signal is determined. The document EP 3 059 559 A1 discloses another self-testing of a FMCW radar system.

Moreover, DE 10 2006 049879 A1 discloses a system of radar sensors integrated in a vehicle for monitoring a zone in front of the vehicle, wherein at least two of the radar sensors are long range radar (LRR) sensors.

It is one object of the present invention to provide an improved monitoring device for monitoring a safety zone, which is defined in claim 1. A further object of the present invention is the provision of an improved method for monitoring a safety zone, which is defined in claim 14.

According to a first aspect, a monitoring device for monitoring a safety zone is provided. The monitoring device comprises:
a first radar device having a first emission unit for emitting a first radar signal in a first zone of the safety zone at a first frequency;
a second radar device having a second emission unit for emitting a second radar signal in a second zone of the safety zone at a second frequency, the first zone and the second zone at least partially overlapping; wherein
the first radar device includes a first reception unit for receiving a first measurement signal including the first and/or second radar signals emitted by the first and/or second emission unit;
the second radar device includes a second reception unit for receiving a second measurement signal including the first and/or second radar signals emitted by the first and/or second emission unit; and
the monitoring device further comprises a processor unit for detecting a failure of the first radar device and/or of the second radar device by determining whether the received first measurement signal and the received second measurement signal both belong to a same predefined bandwidth.

The monitoring device comprises two radar devices which can perform self-testing of one another. In detail, based on the measurement signals received by the two reception units and based on a comparison with the predefined bandwidth, the processor unit can determine whether one of the radar devices or both of them are failing. In particular, a failure of one of the radar device does not remain unnoticed so that appropriate measures can be taken to avoid compromising the safety of the safety zone.

The safety zone can be a three dimensional or a two-dimensional region. In embodiments, the safety zone is a dangerous zone, for example a dangerous zone of a factory arrangement comprising a dangerous factory device. In this case, the presence of a human in the safety zone may be undesired. The safety zone can be a virtual zone, which does not have any physical boundaries.

The term "monitoring" can indicate a detection of objects in the safety zone and/or a detection of properties relating to the object. Such properties may be a size, shape or material of the object, for example. The object can be any type of visible item. For example, it can be a manufactured object, a human, a vehicle or the like.

The first and second radar device, also referred to as "radar devices", can be substantially identical. They can include at least one radar front-end. In some embodiments, the radar devices include commercially off-the-shelf available radar front-ends, which are advantageously easy to obtain and cheap. In particular, in the monitoring device, the two radar devices are independent from one another. This means that they emit and receive radar signals independently from one another.

In the following, the first and second reception units are also referred to as "reception units" and the first and second emission units are also referred to as "emission units". The emission units can be considered as transmission antennas which emit first or second radar signals ("radar signals"). The first and second frequencies, at which the radar signals are respectively emitted by the emission units, can be equal to each other or can be different from one another. Further, the first and second frequencies may vary as the radar signals are emitted. In other word, the first and/or second frequencies may not be fixed.

The reception units can be considered as reception antennas which receive first or second measurement signals ("measurement signals"). In particular, the reception units are broadband RF receivers capable of receiving the full bandwidth of interest.

The radar devices can be devices that uses radar waves for detecting a distance to an object and/or an angle between a reference plane of the radar device and the object. In particular, the position of the object can be determined by combining the information about the distance and angle of the object. The radar devices may also determine the movement direction of the object relative to the radar devices by analysing subsequent positions of the object. The radar devices may further be used to detect the material property of the object. The material property of the object can for example be whether the object is made of wood, plastic, metal, paper, cardboard or if it is a human or an animal. In particular, breathing movements of a human can be detected using the radar devices. This material property may be part of the radar device signal.

The reception units can receive the radar waves (radar signal) that are reflected by the object and/or the environment as measurement signals which are indicative of the position, movement direction and/or material property of the object.

For example, the size of the measurement signals received by the reception units can vary depending on the permittivity of the object. An analysis of the measurement signals received by the reception units may allow to determine the permittivity of the object. In particular, the material out of which the object is made can be determined from its permittivity.

The first and the second radar device may be arranged in a same casing to form the monitoring device. Further, they may be connected to one another and/or to the processor unit through cables. In the monitoring device, the radar devices can be arranged such that the zones monitored by the respective radar devices, which correspond to the first and second zones of the safety zone, at least partially overlap. That way, the radar devices may obtain some redundant information about the safety zone. In particular, the radar devices may be orientated such as to monitor the entire safety zone.

Since the first and second zones of the safety zone at least partially overlap, the first measurement signal received by the first reception unit can include not only first radar signals that were reflected by the object and/or its surroundings, but also second radar signals emitted by the second emission unit that were reflected by the object and/or its surroundings. Similarly, the second measurement signal received by the second reception unit can include not only second radar signals that were reflected by the object and/or its surroundings, but also first radar signals emitted by the first emission unit that were reflected by the object and/or its surroundings.

The processor unit may be implemented as software and/or hardware and may be a component added to the commercially available radar device. It can detect the failure of the radar devices. In particular, the term "failure" here refers to a misfunction and/or a break-down of the radar devices. The processor unit may determine whether the radar devices fail by verifying whether the measurement signals received by the respective reception signals are both in the predefined bandwidth. In particular, the predefined bandwidth is a prestored indication of a bandwidth expected under normal operation of the radar devices.

In detail, the received measurement signal belongs to the predefined bandwidth as a result of interferences between the first and second radar signals. If in the event of a failure only a first radar signal is emitted, there are no interferences between first and second radar signals, and the received measurement signal is not in the predefined bandwidth. If there is no failure of the radar devices, the interference of the radar signals is such that the received measurement signals are both in the predefined bandwidth.

For example, when there is no failure and both radar devices are functioning properly, both emission units are emitting radar signals. In this case, the reception units can receive signals which can be processed by a mixing element of the radar device to generate a beat frequency. The beat frequency can be an intermediate frequency. If the calculated beat frequency is a frequency centred at around f1 - f2, with f1 being the first frequency and f2 being the second frequency, the processor unit determines that no failure of the radar devices occurs. Indeed, if there is no failure of radar devices, both radar devices generate a same beat frequency signal. In this case, the processor unit can determine that there is no failure of the first and second radar devices based on a comparison of the beat frequencies generated by the first and second radar devices. In detail, if the two beat frequencies are approximately equal, the processor unit can determine that there is no failure of the radar devices. In some embodiments, the measurement signals leading to the beat frequencies are additionally compared with a prestored bandwidth value.

Thus, the processor unit allows a self-testing of the monitoring device using two radar signals. In particular, the self-testing can be constantly performed while the monitoring device is monitoring the safety zone, thereby improving the protection of the safety zone. If the processor unit determines a failure of a radar device, a protective measure may be performed. For example, a visual and/or acoustic warning may be emitted, the factory device may be turned off, the failing radar device may be repaired or replaced, or the like. That way, the protection of the safety zone can be improved using the monitoring device.

According to an embodiment, the first emission unit is configured to emit a first frequency sweep centered at a first center frequency as the first radar signal;
the second emission unit is configured to emit a second frequency sweep centered at a second center frequency as the second radar signal;
the processor unit is configured to detect the failure of the first radar device and/or of the second radar device based on the first and second measurement signals received by the first and second reception units upon emission of the first and second frequency sweeps by the first and second emission units.

In particular, the frequencies of the radar signals emitted during the sweeps respectively correspond to the first and second frequencies previously described, which are varying over time. During the frequency sweeps, the frequencies (first and second frequencies) of the radar signals can be modulated from a low frequency (bottom of the frequency band) to a high frequency (top of the frequency band), with the low and high frequencies being centered around the center frequencies. The frequency band for example extends between 24 and 24.25 GHz.

According to a further embodiment, the processor unit detects a failure of the first radar device and/or of the second radar device when the received first measurement signal and the received second measurement signal do not both belong to the same predefined bandwidth.

According to the invention, the processor unit is configured to detect a failure of the first radar device and/or of the second radar device by:
switching the first and the second emission units off and confirming that no measurement signal is received by the first and second reception units;
switching the first emission unit on for emitting the first radar signal at a first predetermined frequency while maintaining the second emission unit off and confirming that no measurement signal is received by the first and second reception units in the predefined bandwidth;
switching the first emission unit off and confirming that no measurement signal is received by the first and second reception units after switching off the first emission unit;
switching the second emission unit on for emitting the second radar signal at a second predetermined frequency while maintaining the first emission unit off and confirming that no measurement signal is received by the first and second reception units in the predefined bandwidth; and
switching the first emission unit on for emitting the first radar signal at the first predetermined frequency and confirming that the second reception unit receives a measurement signal with a predetermined intermediate frequency.

In particular, the processor unit may drive the first and second radar devices in the above-described manner, for example such as to turn their emission units on and off in a prescribed order. By performing the above steps, the processor unit can compare the intermediate frequencies (beat frequencies) of the two radar devices and determine whether a failure occurs. Further, the processor unit may also perform the above steps in the process of configuring the monitoring device, in particular to synchronize the operation of the two radar devices.

In detail, when none of the emission units is emitting a radar signal, no measurement signal should be received at all. Further, when only one of the emission units is emitting a radar signal, the received measurement signals only result from the one emitted radar signal rather than from an interference resulting from the two radar signals. In this case, the received measurement signal is not in the predefined bandwidth. Finally, when both emission units emit a radar signal, the measurement results can both be interferences of the two emitted radar signals and may be in the predefined bandwidth.

By verifying that the measurement results are indeed non-existent, outside the predefined bandwidth and/or inside the predefined bandwidth for different operation modes of the radar devices, the processor unit can set-up the proper operation of the monitoring device and/or determine whether the radar devices operate properly.

According to a further embodiment, the first radar device comprises a first evaluation unit for determining a distance to an object located in the safety zone based on the first measurement signal, and the second radar device comprises a second evaluation unit for determining a distance to an object located in the safety zone based on the second measurement signal.

In particular, the measurement signal from each radar device can be processed individually by the evaluation unit to determine the distance to the object. Thereby, the position of the object can be determined with a higher accuracy. The distance to the object can correspond to the distance between the object and the respective radar devices. In some embodiments, the evaluation unit is part of the processor unit. Alternatively, each radar device can be provided with its own evaluation unit, which can be implemented as hardware and/or as software.

According to a further embodiment, the first evaluation unit is configured to determine the distance to the object by performing a first fast Fourier transform of the first measurement signal received by the first reception unit and by constructing a first range distance image based on the first fast Fourier transform, and the second evaluation unit is configured to determine the distance to the object by performing a second fast Fourier transform of the second measurement signal received by the second reception unit and by constructing a second range distance image based on the second fast Fourier transform.

The fast Fourier transform in particular allows a sampling of the received measurement signal over a period of time and divides the received measurement signal into its frequency components. The range distance image may be an interpretation of the fast Fourier transform which indicates how far away the object is from the radar device.

According to a further embodiment, the processor unit is configured to overlap the first measurement signal and the second measurement signal and/or the first range distance image and the second range distance image to obtain a monitoring result of the monitoring of the safety zone.

The overlap of the measurement signals and/or of the range distance images can be a combination of the measurement signals and/or of the range distance images. This combination can improve the object detection, in particular the detection of the position of the object considerably. In detail, the combination of the measurement signals and/or of the range distance images can improve the signal to noise ratio of the detected objects, in particular by a factor of √2 (square root of 2).

According to a further embodiment,
the first emission unit is configured to emit the first frequency sweep a number N of times during a predefined cycle;
the second emission unit is configured to emit the second frequency sweep N times during the predefined cycle, wherein N is an integer and N>1; and
the processor unit is configured to detect a failure of the first radar device and/or of the second radar device based on the first and second measurement signals received by the first and second reception units at the end of the predefined cycle.

In each cycle, the frequency sweeps may be performed a plurality of times. In particular, 30 to 40 frequency sweeps may be performed per second. For example, the number of sweeps N per cycle can be between 5 and 20. The information about the potential failure of the radar device may be determined only once a predefined cycle is terminated. In particular, the measurement signals of the plurality of frequency sweeps of a predefined cycle can be averaged to obtain a more accurate description of the object in the safety zone.

According to a further embodiment, the monitoring device further comprises a calculation unit for calculating the first center frequency and the second center frequency for the predefined cycle during an anterior cycle prior to the predefined cycle.

The center frequencies of the frequency sweeps are those which will principally be used when calculating the intermediate frequency (beat frequency) at the self-testing. In particular, the center frequencies are chosen such that a difference thereof does not overlap with existing noise and/or background signal. Further, they can be chosen so as to lie within the hardware tolerance of the electric components of the respective radar devices.

According to a further embodiment, the processor unit is configured to continuously detect a failure of the first radar device and/or of the second radar device while the monitoring device is monitoring the safety zone. The safety zone may be monitored without interruptions. Further, the self-testing of the monitoring device can be advantageously performed without interrupting the monitoring of the safety zone.

According to a further embodiment, the monitoring device further comprises a configuration unit for configuring the monitoring device such as to establish a proper radar operation based on first and second measurement signals detected by the first and second reception units when the first and second emission units emit no radar signals and based on measurement signals detected by the first and second reception units when the first emission unit emits a radar signal at a first test frequency and the second emission unit emits a radar signal at a second test frequency.

The monitoring device can be part of the processor unit. Each radar device can be synchronized with the monitoring device to operate at a known unique carrier frequency. This can create crosstalk which enables the two radar devices to "see" each other and hence establish proper operation of the two radar devices simultaneously.

According to a further embodiment, the first radar device and/or the second radar device at least partially operate according on frequency-modulated continuous wave radar (FMCW) technology.

According to a further embodiment, the first radar device and the second radar device are electrically uncoupled from each other. In particular, the two radar devices can be independent from one another and may only be coupled through the processor unit. Moreover, the radar devices can be two separate hardware entities.

According to a further embodiment, the first radar device and the second radar device have different gain characteristics. The different gain characteristics may allow a selection of different operating ranges of the radar devices. These operating ranges can be overlapping. In particular, the gain characteristics are an indication of a gain (in dB) as a function of frequency.

For example, the gain characteristics can be set such that the first radar device is more responsive to objects located in a predefined far-region, while the second radar device is more responsive to objects located in a predefined close-region, with the far-region and the close-region at least partially overlapping and the close region being closer to the radar devices than the far region.

According to a second aspect, a factory arrangement is provided. The factory arrangement comprises:
a safety zone in which at least one factory device is arranged and implemented to perform a predetermined function; and
a monitoring device according to the first aspect and/or according to an embodiment of the first aspect, implemented to detect a presence and/or position of an object in the safety zone.

For example, the factory device is a manufacturing device, a conveyor belt or a packing device. It can comprise dangerous elements such as saws, drills, laser cutters and the like. The factory device can be used to manufacture objects such as metal, plastic or wood objects and/or to pack them in boxes, for example in cardboard boxes. In particular, it should be avoided that a human enters in contact with the dangerous elements of the factory device as the human may injure himself. The safety of the human may be provided by the monitoring device already described above.

According to a third aspect, a method for monitoring a safety zone is provided.

The method comprises:
emitting a first radar signal in a first zone of the safety zone at a first frequency by a first radar device;
emitting a second radar signal in a second zone of the safety zone at a second frequency by a second radar device, the first zone and the second zone at least partially overlapping; wherein
receiving a first measurement signal including the first and/or second radar signals by the first radar device;
receiving a second measurement signal including the first and/or second radar signals by the second radar device; and
detecting a failure of the first radar device and/or of the second radar device by determining whether the received first measurement signal and the received second measurement signal both belong to a same predefined bandwidth.

The method according to the third aspect can be implemented on the monitoring device according to the first aspect or according to an embodiment of the first aspect.

The embodiments and features described with reference to the monitoring device according to the first aspect or according to an embodiment of the first aspect apply mutatis mutandis to the factory arrangement according to the second aspect and to the method according to the third aspect.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows a monitoring device according to a first embodiment;
- Fig. 2: shows a factory arrangement;
- Fig. 3: shows a method for monitoring a safety zone;
- Fig. 4: shows a method for detecting a failure of radar devices;
- Fig. 5: shows a first example of self-testing;
- Fig. 6: shows a second example of self-testing;
- Fig. 7: shows a monitoring device according to a second embodiment; and
- Fig. 8: shows a third example of self-testing.

In the Figures, like reference numerals designate like or functionally equivalent elements, unless otherwise indicated.

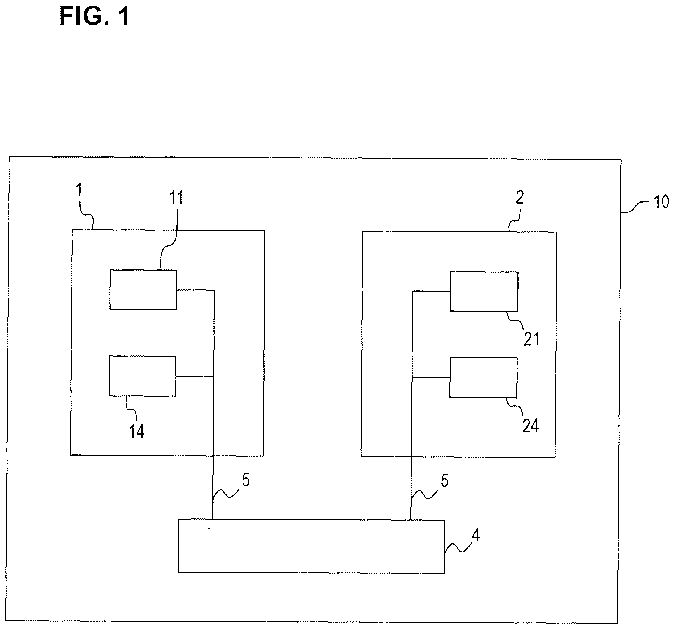

Fig. 1 shows a monitoring device 10 according to a first embodiment. The monitoring device 10 comprises a first radar device 1, a second radar device 2 and a processor unit 4. The first radar device 1 includes a first emission unit 11 and a first reception unit 14. The second radar device 2 includes a second emission unit 21 and a second reception unit 24. The emission units 11, 21 and the reception units 14, 24 are respectively connected to the processor unit 4 through cables 5.

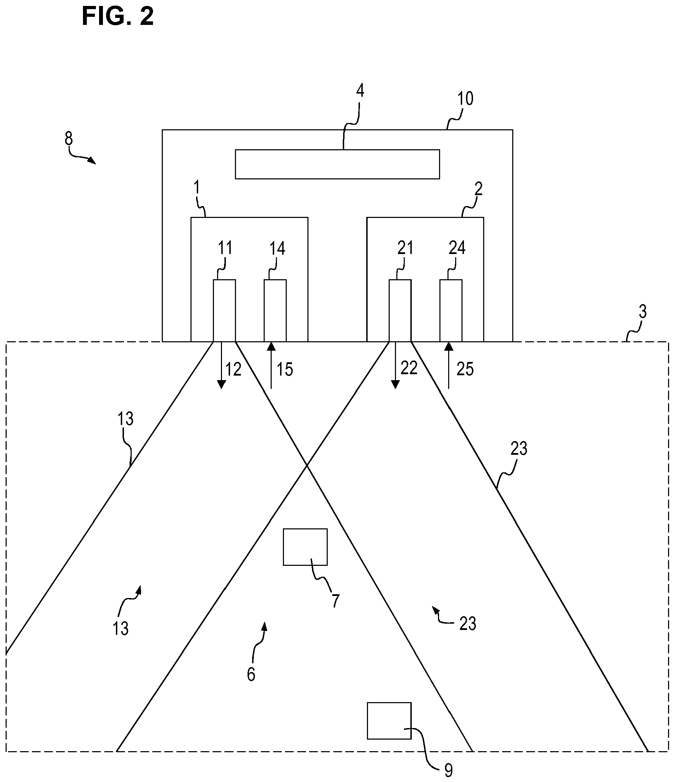

The monitoring device 10 can be part of a factory arrangement 8, an example of which is shown in Fig. 2. Although the arrangement of the individual units 1, 2, 11, 14, 21, 24 is different between the monitoring devices 10 of Fig. 1 and Fig. 2, it is understood that the arrangement of said units 1, 2, 11, 14, 21, 24 is only exemplary and that the function of the monitoring devices 10 of Fig. 1 and 2 is identical.

Beyond the monitoring device 10, the factory arrangement 8 of Fig. 2 further comprises a factory device 9 located in a safety zone 3. The monitoring device 10 is used to monitor the safety zone 3. The safety zone 3 corresponds to a dangerous zone comprising the dangerous factory device 9. In the present example, the factory device 9 is a laser cutter used to cut objects to be manufactured. It is desired that humans, for example technicians, stay outside the safety zone 3 to avoid getting injured by the laser cutter 9. An aim of the monitoring of the safety zone 3 by the monitoring device 10 is thus the recognition and localization of an object 7 inside the safety zone 3. In the example of Fig. 2, the safety zone 3 is a virtual cuboid.

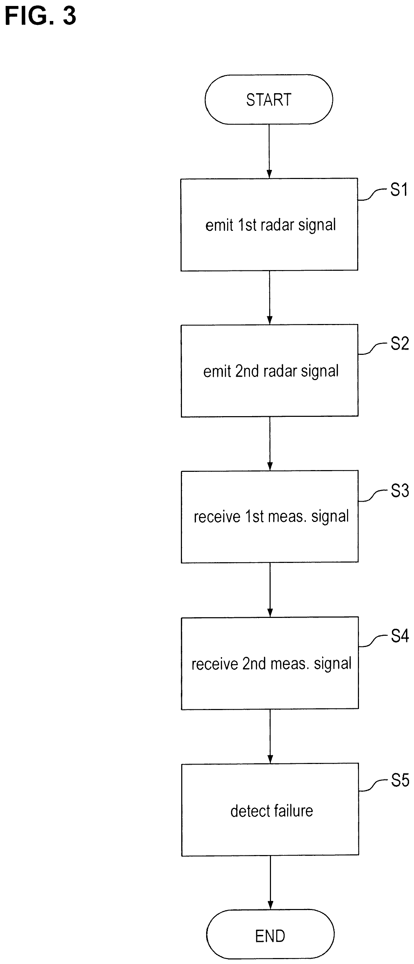

The monitoring device 10 can perform a method for monitoring a safety zone 3. Such a method will be described in view of Fig. 3 in the following. In detail, in a step S1 of Fig. 3, the first emission unit 11 emits a first radar signal 12. The radar signal 12 is emitted as radar waves at a first frequency f1 in a first zone 13 of the safety zone 3. The first zone 13 has a conical shape.

In a step S2 of Fig. 3, the second emission unit 21 emits a second radar signal 22. The second radar signal 22 is emitted as radar waves at a second frequency f2 in a second zone 23 of the safety zone 3. The second zone 23 has a conical shape and partially overlaps with the first zone 13 in an overlapping zone 6.

In a step S3 of Fig. 3, the first reception unit 14 receives a first measurement signal 15. The first measurement signal 15 is a result of the first and second radar signals 12, 22 being reflected by the object 7 and its surroundings. The first measurement signal 15 in particular includes interferences from the first and second radar signals 12, 22.

In a step S4 of Fig. 3, the second reception unit 24 receives a second measurement signal 25. The second measurement signal 25 is a result of the first and second radar signals 12, 22 being reflected by the object 7 and its surroundings. The second measurement signal 25 in particular includes interferences from the first and second radar signals 12, 22.

In a step S5 of Fig. 3, the processor unit 4 determines whether the first and/or second radar device 1, 2 is failing based on the measurement signals 15, 25. This corresponds to a self-testing of the monitoring device 10. In detail, in step S5, the processor unit 4 compares whether intermediate frequencies (beat frequencies) calculated by the respective radar devices 1, 2 based on the received measurement signals 15, 25 are identical and take the value f1 - f2. If the intermediate frequencies are the same at f1 - f2 for both radar devices 1, 2, the processor unit 4 determines that the received measurement signals 15, 25 belong to a same predetermined bandwidth. If the received measurement signals 15, 25 belong to a same predetermined bandwidth, the processor unit 4 determines that the radar devices 1, 2 are functioning normally and that there is no failure. If however the received measurement signals 15, 25 do not belong to a same predetermined bandwidth, the processor unit 4 determines that one of the radar devices 1, 2 is failing and emits an alarm.

In some embodiments, the steps S1- S5 are sequentially repeated. Further, the steps S1- S5 can also be performed in a different order and/or simultaneously.

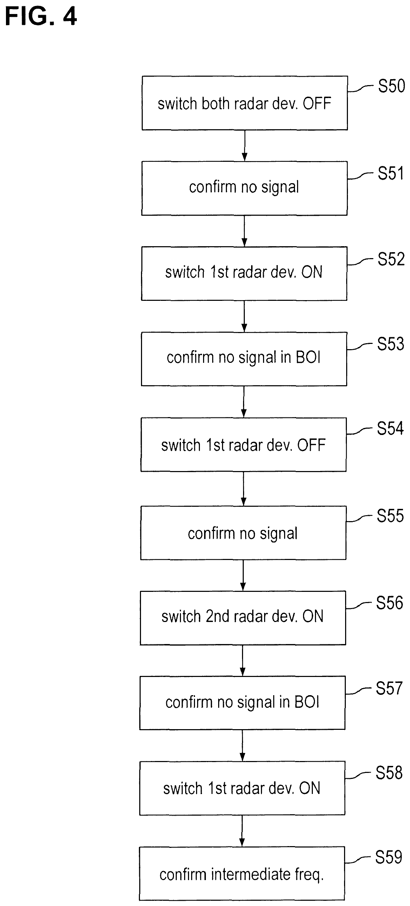

Fig. 4 shows an example of a method for detecting a failure of the radar devices 1, 2. This method may be implemented by the processor unit 4. In detail, in a step S50 of Fig. 4, the processor unit 4 commands the radar devices 1, 2 to respectively switch their emission units 11, 21 off. Accordingly, the emission units 11, 21 are switched off so that they do not emit any radar signal 12, 22.

In a step S51, the processor unit 4 confirms that no measurement signal 15, 25 is received at the reception units 14, 24 at all, as expected since both emission units 11, 21 are off. Then, in a step S52, the processor unit 4 commands the first radar device 1 to switch the first emission unit 11 on. Accordingly, the first emission unit 11 emits a radar signal 12 at a first frequency f1.

In a step S53, the processor unit 4 confirms that no second measurement signal 25 is received in the predefined bandwidth by the second reception unit 24. Indeed, the received measurement signal 25 is only in the predefined bandwidth as a result of interferences between the first and second radar signals 12, 22. Here, since only a first radar signal 12 is emitted, there are no interferences between first and second radar signals 12, 22, and the measurement signal 25 is not in the predefined bandwidth.

In a step S54 of Fig. 4, the processor unit 4 commands the first radar device 1 to stop the first emission unit 11. Accordingly, the emission unit 11 stops emitting the radar signal 12 at the frequency f1.

Similarly to step S51, in a step S55, the processor unit 4 confirms that that no measurement signal 15, 25 is received at the reception units 14, 24 at all, as expected since both emission units 11, 21 are off.

In a step S56, the processor unit 4 commands the second radar device 1 to switch the second emission unit 21 on. Accordingly, the second emission unit 21 emits a radar signal 22 at a second frequency f2.

In a step S57, the processor unit 4 confirms that no first measurement signal 15 is received in the predefined bandwidth by the first reception unit 14. Indeed, the received measurement signal 15 is only in the predefined bandwidth as a result of interferences between the first and second radar signals 12, 22. Here, since only a second radar signal 22 is emitted, there are no interferences between first and second radar signals 12, 22, and the measurement signal 15 is not in the predefined bandwidth.

In a step S58, the processor unit 4 commands the first radar device 1 to switch the first emission unit 11 on, while maintaining the second emission unit 21 on. Accordingly, the first emission unit 11 emits a radar signal 12 at a first frequency f1 and the second emission unit 21 emits a radar signal 22 at a second frequency f2.

In a step S59, the processor unit 4 compares the intermediate frequencies calculated by the first and second radar devices 1, 2 based on the received measurement signals 15, 25. If the intermediate frequencies are both equal to the difference f1 - f2, the processor unit 4 determines that the measurement signals 15, 25 are both in the same predefined bandwidth and that the radar devices 1, 2 are both operating properly. Otherwise, if the intermediate frequencies are not both equal to the difference f1 - f2, the processor unit 4 determines that the measurement signals 15, 25 are not both in the same predefined bandwidth and that the radar devices 1, 2 are not both operating properly, namely that at least one of the radar devices 1, 2 is failing.

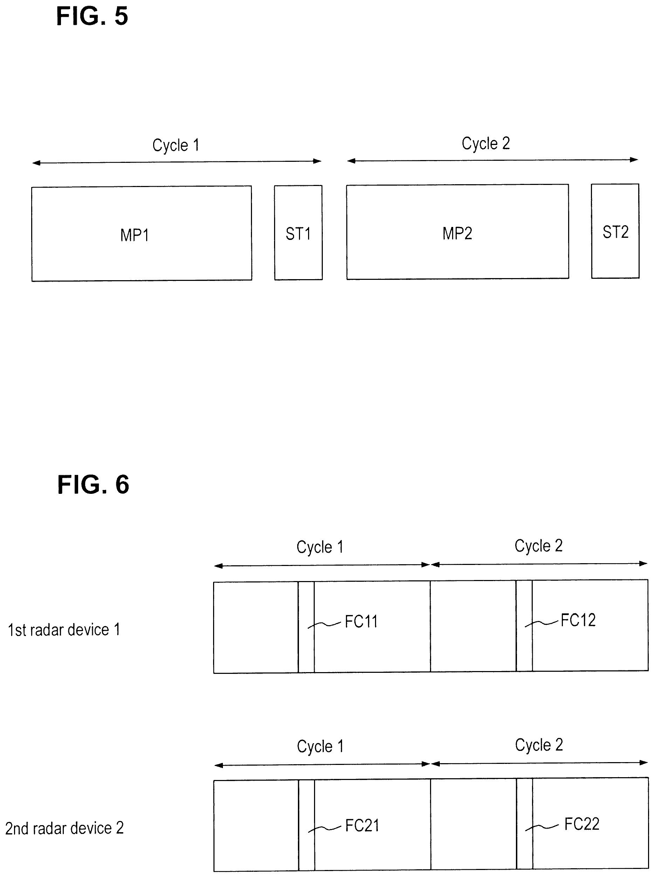

Fig. 5 shows a first example of a self-testing procedure that the monitoring device 10 performs. In the self-testing procedure of Fig. 5, the self-testing ST1, ST2 of the monitoring device 10 (corresponding to the steps S50 to S59 of Fig. 4) is performed at the end of each cycle, after a monitoring phase MP1, MP2 in which the safety zone 3 is monitored.

Fig. 6 shows a second example of a self-testing procedure, in which the self-testing of the monitoring device 10 is performed at the same time as the monitoring of the safety zone 3. In detail, in each cycle, the first emission unit 11 emits at least one frequency sweep centered around a first center frequency FC11, FC12. Parallelly, in each cycle, the second emission unit 21 emits at least one frequency sweep centered around a second center frequency FC21, FC22. The frequency sweeps here correspond to the first frequency f1 and the second frequency f2 described previously.

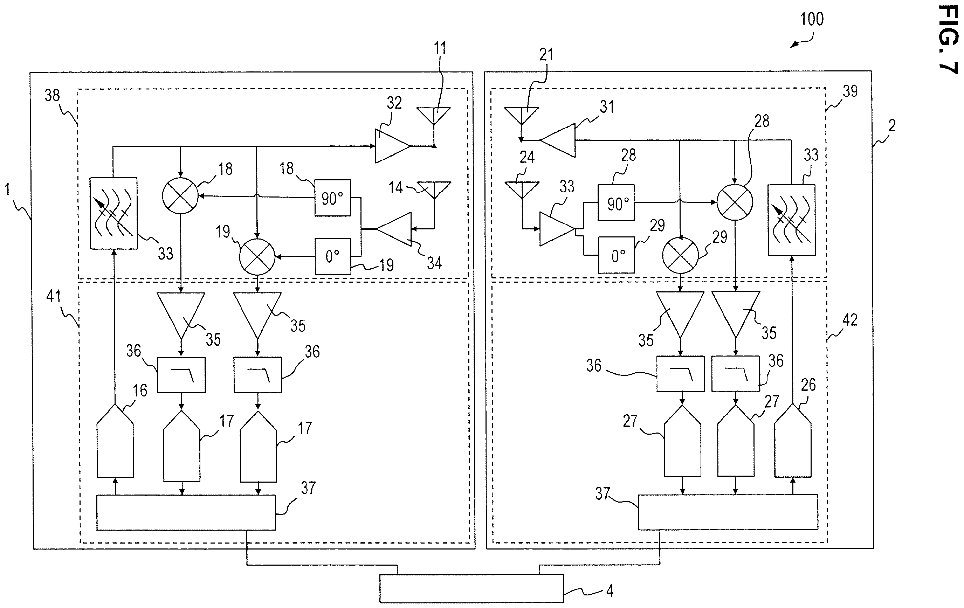

Fig. 7 shows a monitoring device 100 according to a second embodiment. The first radar device 1 comprises a first front end 38 and a first added component block 41. The radar device 2 comprises a second front end 39 and a second added component block 42. The front ends 38, 39 as shown in Fig. 7 form off-the-shelf commercially available radar sensors.

Beyond the emission units 11, 21 and the reception units 14, 24, the first and second front ends 38, 39 of the monitoring device 100 further respectively comprise a power amplifier 31, 32 connected to the emission unit 11, 21, a low-noise amplifier 33, 34 connected to the reception unit 14, 24, a quadrature I-mixer 18, 28 and quadrature Q-mixer 19, 29. The output of the quadrature Q-mixer 19, 29 corresponds to the intermediate frequency previously described.

The components of the added component blocks 41, 42 have been added to the standard front ends 38, 39. They include a digital-to-analog converter (DAC) 16, analog-to-digital converters (ADC) 17, band pass filters 36, amplifier circuits 35 and evaluation units 37 (corresponding to first and second evaluation units). The evaluation units 37 form interfaces between the radar devices 1, 2 and the processor unit 4.

The monitoring device 100 can also be arranged in a factory arrangement 8 and/or is configured to monitor a safety zone 3 by performing the method described in view of Fig. 3.

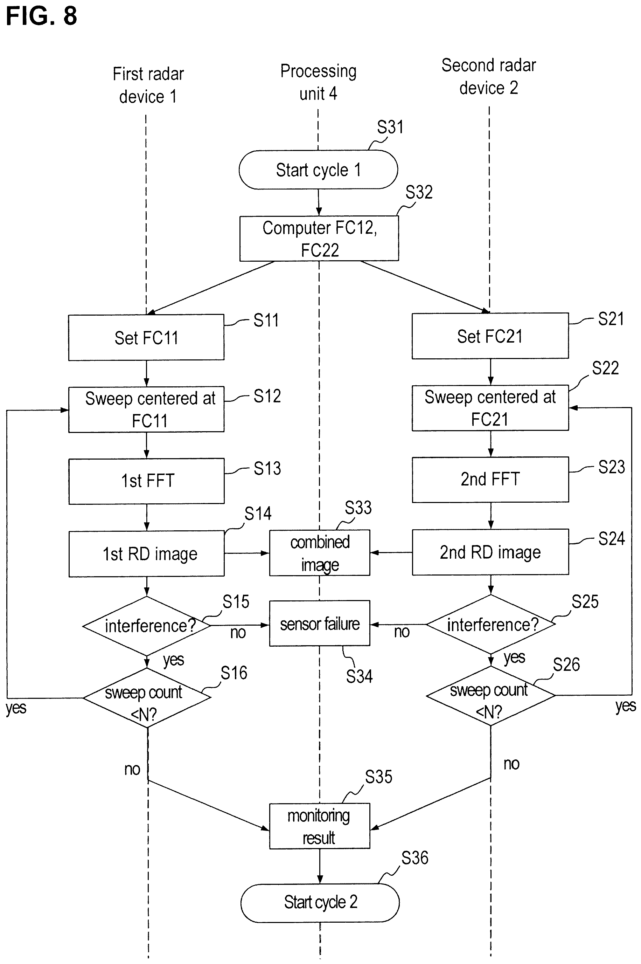

Fig. 8 shows the steps of the self-testing procedure of the monitoring device 10, 100 of Fig. 6 in greater detail. In the self-testing procedure of Fig. 8, the monitoring of the safety zone 3 is performed in parallel to the self-testing. Fig. 8 puts into perspective the functions of the first radar device 1 (on the left in Fig. 8), of the second radar device 2 (on the right in Fig. 8), and of the processor unit 4 (in the center in Fig. 8).

In step S31, a first cycle (cycle 1) starts. In a step S32, the processor unit 4 computes the center frequencies FC12, FC22 of the subsequent cycle 2.

Then, in a step S11, the evaluation unit 37 of the first radar device 1 sets the center frequency FC11 for the current cycle. In step S12, the first emission unit 11 performs a frequency sweep centered around the first center frequency FC11. In a step S13, the evaluation unit 37 of the first radar device 1 performs a first fast Fourier transform (FFT) and determines a first range distance (RD) image in a step S14 based on the first FFT.

In parallel to the steps S11- S14, the second radar device 2 performs analog steps. In detail, in a step S21, the evaluation unit 37 of the second radar device 2 sets the center frequency FC21 for the current cycle. In step S22, the second emission unit 21 performs a frequency sweep centered around the second center frequency FC21. In a step S23, the evaluation unit 37 of the second radar device 2 performs a first fast Fourier transform (FFT) and determines a second range distance (RD) image in a step S24 based on the first FFT.

In a step S33, the processor unit 4 combines the first and second range distance images to obtain an indication on whether there is an object 7 in the safety zone 3 and if so, where it is located.

In a step S15, the evaluation unit 37 of the first radar device 1 determines whether the received measurement signal 15 is indicative of an interference between the radar signals 15, 25. In a step S25, the evaluation unit 37 of the second radar device 1 determines whether the received measurement signal 25 is indicative of an interference between the radar signals 15, 25. If the received measurement signals 15, 25 are not indicative of an interference ("no" in step S15 or S25), the processor unit 4 determines a failure of one of the radar devices 1, 2 in a step S34.

Otherwise, if the received measurement signal 15 is indicative of an interference ("yes" in step S15), the evaluation unit 37 of the first radar device 1 verifies whether the number of frequency sweeps performed in the present cycle exceeds a number N (N≥1). As long as the number of frequency sweeps of the cycle does not exceed N ("yes" in step S16), the steps S12 to S16 are repeated.

Similarly, if the received measurement signal 25 is indicative of an interference ("yes" in step S25), the evaluation unit 37 of the second radar device 2 verifies whether the number of frequency sweeps performed in the present cycle exceeds a number N (N≥1). As long as the number of frequency sweeps of the cycle does not exceed N ("yes" in step S26), the steps S22 to S26 are repeated.

When the number of frequency sweeps of the cycle exceeds N ("no" in steps S16 and S26), the processor unit 4 emits a monitoring result indicating whether there is an object 7 in the safety zone 3 and/or where it is located. In view of the monitoring result, appropriate measures can be taken to protect the safety zone 3. Then, in a step S36, the next cycle (cycle 2) is started.

Although the present invention has been described in accordance with preferred embodiments, it is obvious for the person skilled in the art that modifications are possible in all embodiments. For example, multi-scale detection can be performed by the monitoring device 10, 100 by setting different gain characteristics for the two radar devices 1, 2. That way, one of the radar devices 1, 2 is better at detecting objects 7 that are close to said radar device 1, 2, while the other radar device 1, 2 is better at detecting objects 7 that are further from the said other radar device 1, 2. In particular, the gain characteristics of the radar device 1, 2 can be set such that the regions monitored by the two radar devices 1, 2 overlap.

### REFERENCE NUMERALS

- 1: first radar device
- 2: second radar device
- 3: safety zone
- 4: processor unit
- 5: cable
- 6: overlaping zone
- 7: object
- 8: factory arrangement
- 9: factory device
- 10: monitoring device
- 11: first emission unit
- 12: first radar signal
- 13: first zone
- 14: first reception unit
- 15: first measurement signal
- 16: digital-to-analog converter
- 17: analog-to-digital converter
- 18: quadrature I-mixer
- 19: quadrature Q-mixer
- 21: second emission unit
- 22: second radar signal
- 23: second zone
- 24: second reception unit
- 25: second measurement signal
- 26: digital-to-analog converter
- 27: analog-to-digital converter
- 28: quadrature I-mixer
- 29: quadrature Q-mixer
- 31, 32: power amplifier
- 33, 34: low noise amplifier
- 35: amplifier circuit
- 36: band pass filter
- 37: evaluation unit
- 38: first front end
- 39: second front end
- 41: first added block
- 42: second added block
- 100: monitoring device
- FC11, FC12: first center frequency
- FC21, FC22: second center frequency
- f1: first frequency
- f2: second frequency
- MP1, MP2: monitoring phase
- ST1, ST2: self-test
- S1 - S5: method steps
- S11 - S16: method steps
- S21 - S26: method steps
- S31- S36: method steps
- S50 - S59: method steps

## Claims

1. A monitoring device (10, 100) for monitoring a safety zone (3), the monitoring device (10, 100) comprising:
a first radar device (1) having a first emission unit (11) for emitting a first radar signal (12) in a first zone (13) of the safety zone (3) at a first frequency (f1);
a second radar device (2) having a second emission unit (21) for emitting a second radar signal (22) in a second zone (23) of the safety zone (3) at a second frequency (f2), the first zone (13) and the second zone (23) at least partially overlapping; wherein
the first radar device (1) includes a first reception unit (14) for receiving a first measurement signal (15) including the first and/or second radar signals (12, 22) emitted by the first and/or second emission unit (11, 21);
the second radar device (2) includes a second reception unit (24) for receiving a second measurement signal (25) including the first and/or second radar signals (12, 22) emitted by the first and/or second emission unit (11, 21); and
the monitoring device (10, 100) further comprises a processor unit (4) for detecting a failure of the first radar device (1) and/or of the second radar device (2) by determining whether the received first measurement signal (15) and the received second measurement signal (25) both belong to a same predefined bandwidth, **characterized in that**
the processor unit (4) is configured to detect a failure of the first radar device (1) and/or of the second radar device (2) by:
switching the first and the second emission units (11, 21) off, confirming that no measurement signal (15, 25) is received by the first and second reception units (14, 24);
switching the first emission unit (11) on for emitting the first radar signal (12) at a first predetermined frequency while maintaining the second emission unit (21) off, confirming that no measurement signal (15, 25) is received by the first and second reception units (14, 24) in the predefined bandwidth;
switching the first emission unit (11) off, confirming that no measurement signal (15, 25) is received by the first and second reception units (14, 24) after switching off the first emission unit (11);
switching the second emission unit (21) on for emitting the second radar signal (22) at a second predetermined frequency while maintaining the first emission unit (11) off, confirming that no measurement signal (15, 25) is received by the first and second reception units (14, 24) in the predefined bandwidth; and
switching the first emission unit (11) on for emitting the first radar signal (12) at the first predetermined frequency and confirming that the second reception unit (24) receives a measurement signal (15, 25) with a predetermined intermediate frequency.

2. The monitoring device according to claim 1, wherein
the first emission unit (11) is configured to emit a first frequency sweep centered at a first center frequency (FC11, FC12) as the first radar signal (12);
the second emission unit (21) is configured to emit a second frequency sweep centered at a second center frequency (FC21, FC22) as the second radar signal (22);
the processor unit (4) is configured to detect the failure of the first radar device (1) and/or of the second radar device (2) based on the first and second measurement signals (15, 25) received by the first and second reception units (14, 24) upon emission of the first and second frequency sweeps by the first and second emission units (11, 21).

3. The monitoring device according to claim 1 or 2, wherein the processor unit (4) detects a failure of the first radar device (1) and/or of the second radar device (2) when the received first measurement signal (15) and the received second measurement signal (25) do not both belong to the same predefined bandwidth.

4. The monitoring device according to any one of claims 1 to 3, wherein
the first radar device (1) comprises a first evaluation unit (37) for determining a distance to an object (7) located in the safety zone (3) based on the first measurement signal (15); and
the second radar device (2) comprises a second evaluation unit (37) for determining a distance to an object (7) located in the safety zone (3) based on the second measurement signal (25).

5. The monitoring device according to claim 4, wherein
the first evaluation unit (37) is configured to determine the distance to the object by performing a first fast Fourier transform of the first measurement signal (15) received by the first reception unit (14) and by constructing a first range distance image based on the first fast Fourier transform; and
the second evaluation unit (37) is configured to determine the distance to the object by performing a second fast Fourier transform of the second measurement signal (25) received by the second reception unit (24) and by constructing a second range distance image based on the second fast Fourier transform.

6. The monitoring device according to any one of claims 1 to 5, wherein the processor unit (4) is configured to overlap the first measurement signal (15) and the second measurement signal (25) and/or the first range distance image and the second range distance image to obtain a monitoring result of the monitoring of the safety zone (3).

7. The monitoring device according to any one of claims 2 to 6, wherein
the first emission unit (11) is configured to emit the first frequency sweep a number N of times during a predefined cycle;
the second emission unit (21) is configured to emit the second frequency sweep N times during the predefined cycle, wherein N is an integer and N>1; and
the processor unit (4) is configured to detect a failure of the first radar device (1) and/or of the second radar device (2) based on the first and second measurement signals (15, 25) received by the first and second reception units (14, 24) at the end of the predefined cycle.

8. The monitoring device according to any one of claims 2 to 7, further comprises a calculation unit (4) for calculating the first center frequency and the second center frequency for the predefined cycle during an anterior cycle prior to the predefined cycle.

9. The monitoring device according to any one of claims 1 to 8, wherein the processor unit (4) is configured to continuously detect a failure of the first radar device (1) and/or of the second radar device (2) while the monitoring device (10, 100) is monitoring the safety zone (3).

10. The monitoring device according to any one of claims 1 to 9, wherein the first radar device (1) and/or the second radar device (2) at least partially operate according on frequency-modulated continuous wave radar (FMCW) technology.

11. The monitoring device according to any one of claims 1 to 10, wherein the first radar device (1) and the second radar device (2) are electrically uncoupled from each other.

12. The monitoring device according to any one of claims 1 to 11, wherein the first radar device (1) and the second radar device (2) have different gain characteristics.

13. A factory arrangement comprising:
a safety zone (3) in which at least one factory device (9) is arranged and implemented to perform a predetermined function; and
a monitoring device according to any one claims 1 to 12, implemented to detect a presence and/or position of an object (7) in the safety zone (3).

14. A method for monitoring a safety zone (3) comprising:
emitting a first radar signal (12) in a first zone (13) of the safety zone (3) at a first frequency (f1) by a first radar device (1);
emitting a second radar signal (22) in a second zone (23) of the safety zone (3) at a second frequency (f2) by a second radar device (2), the first zone (13) and the second zone (23) at least partially overlapping; wherein
receiving a first measurement signal (15) including the first and/or second radar signals (12, 22) by the first radar device (1);
receiving a second measurement signal (25) including the first and/or second radar signals (12, 22) by the second radar device (2); and
detecting a failure of the first radar device (1) and/or of the second radar device (2) by determining whether the received first measurement signal (15) and the received second measurement signal (25) both belong to a same predefined bandwidth, **characterized in that** the failure of the first radar device (1) and/or of the second radar device (2) is detected by:
switching the first and the second emission units (11, 21) off, confirming that no measurement signal (15, 25) is received by the first and second reception units (14, 24);
switching the first emission unit (11) on for emitting the first radar signal (12) at a first predetermined frequency while maintaining the second emission unit (21) off, confirming that no measurement signal (15, 25) is received by the first and second reception units (14, 24) in the predefined bandwidth;
switching the first emission unit (11) off, confirming that no measurement signal (15, 25) is received by the first and second reception units (14, 24) after switching off the first emission unit (11);
switching the second emission unit (21) on for emitting the second radar signal (22) at a second predetermined frequency while maintaining the first emission unit (11) off, confirming that no measurement signal (15, 25) is received by the first and second reception units (14, 24) in the predefined bandwidth; and
switching the first emission unit (11) on for emitting the first radar signal (12) at the first predetermined frequency and confirming that the second reception unit (24) receives a measurement signal (15, 25) with a predetermined intermediate frequency.

## Patentansprüche

1. Überwachungsvorrichtung (10, 100) zur Überwachung einer Sicherheitszone (3), wobei die Überwachungsvorrichtung (10, 100) umfasst:
eine erste Radarvorrichtung (1) mit einer ersten Sendeeinheit (11) zum Aussenden eines ersten Radarsignals (12) in eine erste Zone (13) der Sicherheitszone (3) mit einer ersten Frequenz (f1);
eine zweite Radarvorrichtung (2) mit einer zweiten Sendeeinheit (21) zum Aussenden eines zweiten Radarsignals (22) in eine zweite Zone (23) der Sicherheitszone (3) mit einer zweiten Frequenz (f2), wobei sich die erste Zone (13) und die zweite Zone (23) zumindest teilweise überlappen; wobei
die erste Radarvorrichtung (1) eine erste Empfangseinheit (14) zum Empfangen eines ersten Messsignals (15) umfasst, das das erste und/oder das zweite Radarsignal (12, 22), das von der ersten und/oder zweiten Sendeeinheit (11,21) ausgesendet wird, umfasst;
die zweite Radarvorrichtung (2) eine zweite Empfangseinheit (24) zum Empfangen eines zweiten Messsignals (25) umfasst, das das erste und/oder zweite Radarsignale (12, 22), das von der ersten und/oder zweiten Sendeeinheit (11, 21) ausgesendet wird, umfasst; und
die Überwachungsvorrichtung (10, 100) ferner eine Prozessoreinheit (4) zum Erkennen eines Fehlers in der ersten Radarvorrichtung (1) und/oder in der zweiten Radarvorrichtung (2) durch Bestimmen, ob das empfangene erste Messsignal (15) und das empfangene zweite Messsignal (25) beide zu einer gleichen vordefinierten Bandbreite gehören, **dadurch gekennzeichnet, dass**
die Prozessoreinheit (4) geeignet ist, einen Fehler in der ersten Radarvorrichtung (1) und/oder in der zweiten Radarvorrichtung (2) zu erkennen, indem sie:
die erste und die zweite Sendeeinheit (11,21) ausschaltet und bestätigt, dass kein Messsignal (15, 25) durch die erste und die zweite Empfangseinheit (14, 24) empfangen wird;
die erste Sendeeinheit (11) zum Aussenden des ersten Radarsignals (12) mit einer ersten vordefinierten Frequenz einschaltet, während die zweite Sendeeinheit (21) ausgeschaltet bleibt, und bestätigt, dass kein Messsignal (15, 25) in der vordefinierten Bandbreite durch die erste und zweite Empfangseinheit (14, 24) empfangen wird;
die erste Sendeeinheit (11) ausschaltet und bestätigt, dass nach dem Ausschalten der ersten Sendeeinheit (11) kein Messsignal (15, 25) von der ersten und zweiten Empfangseinheit (14, 24) empfangen wird;
die zweite Sendeeinheit (21) zum Aussenden des zweiten Radarsignals (22) mit einer zweiten vordefinierten Frequenz einschaltet, während die erste Sendeeinheit (11) ausgeschaltet bleibt, und bestätigt, dass von der ersten und zweiten Empfangseinheit (14, 24) kein Messsignal (15, 25) in der vordefinierten Bandbreite empfangen wird; und
die erste Sendeeinheit (11) zum Aussenden des ersten Radarsignals (12) mit der ersten vordefinierten Frequenz einschaltet und bestätigt, dass die zweite Empfangseinheit (24) ein Messsignal (15, 25) mit einer vordefinierten Zwischenfrequenz empfängt.

2. Überwachungsvorrichtung nach Anspruch 1, wobei
die erste Sendeeinheit (11) geeignet ist, einen ersten Frequenzdurchlauf, der um eine erste Mittenfrequenz (FC11, FC12) zentriert ist, als das erste Radarsignal (12) auszusenden;
die zweite Sendeeinheit (21) geeignet ist, einen zweiten Frequenzdurchlauf, der um eine zweite Mittenfrequenz (FC21, FC22) zentriert ist, als das zweite Radarsignal (22) auszusenden;
die Prozessoreinheit (4) geeignet ist, den Fehler in der ersten Radarvorrichtung (1) und/oder der zweiten Radarvorrichtung (2) auf der Grundlage der ersten und zweiten Messsignale (15, 25), die infolge der Aussendung der ersten und zweiten Frequenzdurchläufe durch die ersten und zweiten Sendeeinheiten (11,21) von den ersten und zweiten Empfangseinheiten (14, 24) empfangen werden, zu erkennen.

3. Überwachungsvorrichtung nach Anspruch 1 oder 2, wobei die Prozessoreinheit (4) einen Fehler in der ersten Radarvorrichtung (1) und/oder der zweiten Radarvorrichtung (2) erkennt, wenn das empfangene erste Messsignal (15) und das empfangene zweite Messsignal (25) nicht beide zur gleichen vordefinierten Bandbreite gehören.

4. Überwachungsvorrichtung nach einem der Ansprüche 1 bis 3, wobei
die erste Radarvorrichtung (1) eine erste Auswerteeinheit (37) zur Bestimmung eines Abstands zu einem in der Sicherheitszone (3) befindlichen Objekt (7) auf der Grundlage des ersten Messsignals (15) umfasst; und
die zweite Radarvorrichtung (2) eine zweite Auswerteeinheit (37) zur Bestimmung eines Abstands zu einem in der Sicherheitszone (3) befindlichen Objekt (7) auf der Grundlage des zweiten Messsignals (25) umfasst.

5. Überwachungsvorrichtung nach Anspruch 4, wobei
die erste Auswerteeinheit (37) geeignet ist, den Abstand zu dem Objekt zu bestimmen, indem sie eine erste schnelle Fourier-Transformation des ersten Messsignals (15) durchführt, das von der ersten Empfangseinheit (14) empfangen wird, und indem sie ein erstes Bereichsabstandsbild auf der Grundlage der ersten schnellen Fourier-Transformation konstruiert; und
die zweite Auswerteeinheit (37) geeignet ist, den Abstand zu dem Objekt zu bestimmen, indem sie eine zweite schnelle Fourier-Transformation des zweiten Messsignals (25) durchführt, das von der zweiten Empfangseinheit (24) empfangen wird, und indem sie ein zweites Bereichsabstandsbild auf der Grundlage der zweiten schnellen Fourier-Transformation konstruiert.

6. Überwachungsvorrichtung nach einem der Ansprüche 1 bis 5, wobei die Prozessoreinheit (4) geeignet ist, das erste Messsignal (15) und das zweite Messsignal (25) und/oder das erste Bereichsabstandsbild und das zweite Bereichsabstandsbild zu überlappen, um ein Überwachungsergebnis der Überwachung der Sicherheitszone (3) zu erhalten.

7. Überwachungsvorrichtung nach einem der Ansprüche 2 bis 6, wobei
die erste Sendeeinheit (11) geeignet ist, den ersten Frequenzdurchlauf N Mal während eines vordefinierten Zyklus auszusenden;
die zweite Sendeeinheit (21) geeignet ist, den zweiten Frequenzdurchlauf N Mal während des vordefinierten Zyklus auszusenden, wobei N eine ganze Zahl ist und N > 1; und
die Prozessoreinheit (4) geeignet ist, einen Fehler in der ersten Radarvorrichtung (1) und/oder der zweiten Radarvorrichtung (2) auf der Grundlage der ersten und zweiten Messsignale (15, 25), die von der ersten und zweiten Empfangseinheit (14, 24) am Ende des vordefinierten Zyklus empfangen werden, zu erkennen.

8. Überwachungsvorrichtung nach einem der Ansprüche 2 bis 7, welche ferner eine Berechnungseinheit (4) zum Berechnen der ersten Mittenfrequenz und der zweiten Mittenfrequenz für den vordefinierten Zyklus während eines vorhergehenden Zyklus vor dem vordefinierten Zyklus umfasst.

9. Überwachungsvorrichtung nach einem der Ansprüche 1 bis 8, wobei die Prozessoreinheit (4) geeignet ist, kontinuierlich einen Fehler in der ersten Radarvorrichtung (1) und/oder der zweiten Radarvorrichtung (2) zu erkennen, während die Überwachungsvorrichtung (10, 100) die Sicherheitszone (3) überwacht.

10. Überwachungsvorrichtung nach einem der Ansprüche 1 bis 9, wobei die erste Radarvorrichtung (1) und/oder die zweite Radarvorrichtung (2) zumindest teilweise gemäß der frequenzmodulierten Dauerstrichradartechnologie (FMCW) arbeitet.

11. Überwachungsvorrichtung nach einem der Ansprüche 1 bis 10, wobei die erste Radarvorrichtung (1) und die zweite Radarvorrichtung (2) elektrisch voneinander entkoppelt sind.

12. Überwachungsvorrichtung nach einem der Ansprüche 1 bis 11, wobei die erste Radarvorrichtung (1) und die zweite Radarvorrichtung (2) unterschiedliche Verstärkungseigenschaften haben.

13. Fabrikanordnung, umfassend:
eine Sicherheitszone (3), in der mindestens eine Fabrikvorrichtung (9) angeordnet ist und geeignet ist, eine vordefinierte Funktion auszuführen; und
eine Überwachungsvorrichtung nach einem der Ansprüche 1 bis 12, die geeignet ist, eine Anwesenheit und/oder Position eines Objekts (7) in der Sicherheitszone (3) zu erkennen.

14. Verfahren zur Überwachung einer Sicherheitszone (3), umfassend:
Aussenden eines ersten Radarsignals (12) in einer ersten Zone (13) der Sicherheitszone (3) mit einer ersten Frequenz (f1) durch eine erste Radarvorrichtung (1);
Aussenden eines zweiten Radarsignals (22) in einer zweiten Zone (23) der Sicherheitszone (3) mit einer zweiten Frequenz (f2) durch eine zweite Radarvorrichtung (2), wobei sich die erste Zone (13) und die zweite Zone (23) zumindest teilweise überlappen;
Empfangen eines ersten Messsignals (15) einschließlich des ersten und/oder zweiten Radarsignals (12, 22) durch die erste Radarvorrichtung (1);
Empfangen eines zweiten Messsignals (25), das das erste und/oder zweite Radarsignal (12, 22) enthält, durch die zweite Radarvorrichtung (2); und
Erkennen eines Fehlers in der ersten Radarvorrichtung (1) und/oder in der zweiten Radarvorrichtung (2) durch Bestimmung, ob das empfangene erste Messsignal (15) und das empfangene zweite Messsignal (25) beide zu einer gleichen vordefinierten Bandbreite gehören, **dadurch gekennzeichnet, dass**
der Fehler in der ersten Radarvorrichtung (1) und/oder der zweiten Radarvorrichtung (2) durch folgende Schritte erkannt wird:
Ausschalten der ersten und der zweiten Sendeeinheit (11, 21) und Bestätigen, dass kein Messsignal (15, 25) von der ersten und der zweiten Empfangseinheit (14, 24) empfangen wird;
Einschalten der ersten Sendeeinheit (11) zum Aussenden des ersten Radarsignals (12) mit einer ersten vordefinierten Frequenz, während die zweite Sendeeinheit (21) ausgeschaltet bleibt, wobei bestätigt wird, dass von der ersten und zweiten Empfangseinheit (14, 24) kein Messsignal (15, 25) in der vordefinierten Bandbreite empfangen wird;
Ausschalten der ersten Sendeeinheit (11) und Bestätigen, dass nach dem Ausschalten der ersten Sendeeinheit (11) kein Messsignal (15, 25) von der ersten und zweiten Empfangseinheit (14, 24) empfangen wird;
Einschalten der zweiten Sendeeinheit (21) zum Aussenden des zweiten Radarsignals (22) mit einer zweiten vordefinierten Frequenz, während die erste Sendeeinheit (11) ausgeschaltet bleibt, und Bestätigen, dass von der ersten und zweiten Empfangseinheit (14, 24) kein Messsignal (15, 25) in der vordefinierten Bandbreite empfangen wird; und
Einschalten der ersten Sendeeinheit (11) zum Aussenden des ersten Radarsignals (12) mit der ersten vordefinierten Frequenz und Bestätigen, dass die zweite Empfangseinheit (24) ein Messsignal (15, 25) mit einer vordefinierten Zwischenfrequenz empfängt.

## Revendications

1. Dispositif de surveillance (10, 100) pour surveiller une zone de sécurité (3), le dispositif de surveillance (10, 100) comprenant :
un premier dispositif radar (1) comportant une première unité d'émission (11) pour émettre un premier signal radar (12) dans une première zone (13) de la zone de sécurité (3) à une première fréquence (f1) ;
un second dispositif radar (2) comportant une seconde unité d'émission (21) pour émettre un second signal radar (22) dans une seconde zone (23) de la zone de sécurité (3) à une seconde fréquence (f2), la première zone (13) et la seconde zone (23) se superposant au moins partiellement ; dans lequel
le premier dispositif radar (1) comprend une première unité de réception (14) pour recevoir un premier signal de mesure (15) comprenant le premier et/ou second signal radar (12, 22) émis par la première et/ou la seconde unité d'émission (11, 21) ;
le second dispositif radar (2) comprend une seconde unité de réception (24) pour recevoir un second signal de mesure (25) comprenant le premier et/ou second signal radar (12, 22) émis par la première et/ou la seconde unité d'émission (11, 21) ; et
le dispositif de surveillance (10, 100) comprend en outre une unité de traitement (4) pour détecter une défaillance du premier dispositif radar (1) et/ou du second dispositif radar (2) en déterminant si le premier signal de mesure (15) reçu et le second signal de mesure (25) reçu appartiennent tous deux à une même bande passante prédéfinie, **caractérisé en ce que**
l'unité de traitement (4) est configurée pour détecter une défaillance du premier dispositif radar (1) et/ou du second dispositif radar (2) en :
désactivant la première et la seconde unité d'émission (11, 21) et en confirmant qu'aucun signal de mesure (15, 25) n'est reçu par la première et la seconde unité de réception (14, 24) ;
activant la première unité d'émission (11) pour émettre le premier signal radar (12) à une première fréquence prédéfinie tout en maintenant la seconde unité d'émission (21) désactivée et en confirmant qu'aucun signal de mesure (15, 25) n'est reçu par la première et la seconde unité de réception (14, 24) dans la bande passante prédéfinie ;
désactivant la première unité d'émission (11) et en confirmant qu'aucun signal de mesure (15, 25) n'est reçu par la première et la seconde unité de réception (14, 24) après la désactivation de la première unité d'émission (11) ;
activant la seconde unité d'émission (21) pour émettre le second signal radar (22) à une seconde fréquence prédéfinie tout en maintenant la première unité d'émission (11) désactivée, et en confirmant qu'aucun signal de mesure (15, 25) n'est reçu par la première et la seconde unité de réception (14, 24) dans la bande passante prédéfinie ; et en
activant la première unité d'émission (11) pour émettre le premier signal radar (12) à la première fréquence prédéfinie et confirmer que la seconde unité de réception (24) reçoit un signal de mesure (15, 25) avec une fréquence intermédiaire prédéfinie.

2. Dispositif de surveillance selon la revendication 1, dans lequel
la première unité d'émission (11) est configurée pour émettre un premier balayage de fréquence centré sur une première fréquence centrale (FC11, FC12) comme premier signal radar (12) ;
la seconde unité d'émission (21) est configurée pour émettre un second balayage de fréquence centré sur une seconde fréquence centrale (FC21, FC22) comme second signal radar (22) ;
l'unité de traitement (4) est configurée pour détecter la défaillance du premier dispositif radar (1) et/ou du second dispositif radar (2) sur la base des premier et second signaux de mesure (15, 25) reçus par la première et la seconde unité de réception (14, 24) suite à l'émission du premier et du second balayage de fréquence par la première et la seconde unité d'émission (11, 21).

3. Dispositif de surveillance selon la revendication 1 ou 2, dans lequel l'unité de traitement (4) détecte une défaillance du premier dispositif radar (1) et/ou du second dispositif radar (2) lorsque le premier signal de mesure (15) reçu et le second signal de mesure (25) reçu n'appartiennent pas tous deux à la même largeur de bande prédéfinie.

4. Dispositif de surveillance selon l'une quelconque des revendications 1 à 3, dans lequel
le premier dispositif radar (1) comprend une première unité d'évaluation (37) pour déterminer une distance à un objet (7) situé dans la zone de sécurité (3) sur la base du premier signal de mesure (15) ; et
le second dispositif radar (2) comprend une seconde unité d'évaluation (37) pour déterminer une distance à un objet (7) situé dans la zone de sécurité (3) sur la base du second signal de mesure (25).

5. Dispositif de surveillance selon la revendication 4, dans lequel
la première unité d'évaluation (37) est configurée pour déterminer la distance à l'objet en effectuant une première transformée de Fourier rapide du premier signal de mesure (15) reçu par la première unité de réception (14) et en construisant une première image de distance de rayon basée sur la première transformée de Fourier rapide ; et
la seconde unité d'évaluation (37) est configurée pour déterminer la distance à l'objet en effectuant une seconde transformée de Fourier rapide du second signal de mesure (25) reçu par la seconde unité de réception (24) et en construisant une seconde image de distance de rayon basée sur la seconde transformée de Fourier rapide.

6. Dispositif de surveillance selon l'une des revendications 1 à 5, dans lequel l'unité de traitement (4) est configurée pour superposer le premier signal de mesure (15) et le second signal de mesure (25) et/ou la première image de distance de rayon et la seconde image de distance de rayon pour obtenir un résultat de surveillance de la surveillance de la zone de sécurité (3).

7. Dispositif de surveillance selon l'une quelconque des revendications 2 à 6, dans lequel
la première unité d'émission (11) est configurée pour émettre le premier balayage de fréquence un nombre N de fois au cours d'un cycle prédéfini ;
la seconde unité d'émission (21) est configurée pour émettre le second balayage de fréquence N fois pendant le cycle prédéfini, où N est un entier et N>1 ; et
l'unité de traitement (4) est configurée pour détecter une défaillance du premier dispositif radar (1) et/ou du second dispositif radar (2) sur la base des premier et second signaux de mesure (15, 25) reçus par la première et la seconde unité de réception (14, 24) à la fin du cycle prédéfini.

8. Dispositif de surveillance selon l'une quelconque des revendications 2 à 7, comprenant en outre une unité de calcul (4) pour calculer la première fréquence centrale et la seconde fréquence centrale pour le cycle prédéfini pendant un cycle antérieur au cycle prédéfini.

9. Dispositif de surveillance selon l'une quelconque des revendications 1 à 8, dans lequel l'unité de calcul (4) est configurée pour détecter en continu une défaillance du premier dispositif radar (1) et/ou du second dispositif radar (2) pendant que le dispositif de surveillance (10, 100) surveille la zone de sécurité (3).

10. Dispositif de surveillance selon l'une des revendications 1 à 9, dans lequel le premier dispositif radar (1) et/ou le second dispositif radar (2) fonctionnent au moins partiellement selon la technologie du radar à ondes continues modulées en fréquence (FMCW).

11. Dispositif de surveillance selon l'une des revendications 1 à 10, dans lequel le premier dispositif radar (1) et le second dispositif radar (2) sont découplés électriquement l'un de l'autre.

12. Dispositif de surveillance selon l'une des revendications 1 à 11, dans lequel le premier dispositif radar (1) et le second dispositif radar (2) ont des caractéristiques de gain différentes.

13. Agencement d'usine comprenant :
une zone de sécurité (3) dans laquelle au moins un dispositif d'usine (9) est disposé qui est configuré pour exécuter une fonction prédéfinie ; et
un dispositif de surveillance selon l'une des revendications 1 à 12, qui est configuré pour détecter la présence et/ou la position d'un objet (7) dans la zone de sécurité (3).

14. Procédé de surveillance d'une zone de sécurité (3) comprenant :
l'émission d'un premier signal radar (12) dans une première zone (13) de la zone de sécurité (3) à une première fréquence (f1) par un premier dispositif radar (1) ;
l'émission d'un second signal radar (22) dans une seconde zone (23) de la zone de sécurité (3) à une seconde fréquence (f2) par un second dispositif radar (2), la première zone (13) et la seconde zone (23) se superposant au moins partiellement ;
la réception d'un premier signal de mesure (15) comprenant le premier et/ou le second signal radar (12, 22) par le premier dispositif radar (1) ;
la réception d'un second signal de mesure (25) comprenant le premier et/ou le second signal radar (12, 22) par le second dispositif radar (2) ; et
la détection d'une défaillance du premier dispositif radar (1) et/ou du second dispositif radar (2) en déterminant si le premier signal de mesure (15) reçu et le second signal de mesure (25) reçu appartiennent tous deux à une même bande passante, **caractérisé en ce que**
la défaillance du premier dispositif radar (1) et/ou du second dispositif radar (2) est détectée par :
la désactivation de la première et de la seconde unité d'émission (11, 21) et la confirmation qu'aucun signal de mesure (15, 25) n'est reçu par la première et la seconde unité de réception (14, 24) ;
l'activation de la première unité d'émission (11) pour émettre le premier signal radar (12) à une première fréquence prédéfinie tout en maintenant la seconde unité d'émission (21) désactivée et la confirmation qu'aucun signal de mesure (15, 25) n'est reçu par la première et la seconde unité de réception (14, 24) dans la bande passante prédéfinie ;
la désactivation de la première unité d'émission (11) et la confirmation qu'aucun signal de mesure (15, 25) n'est reçu par la première et la seconde unité de réception (14, 24) après la désactivation de la première unité d'émission (11) ;
l'activation de la seconde unité d'émission (21) pour émettre le second signal radar (22) à une seconde fréquence prédéfinie tout en maintenant la première unité d'émission (11) désactivée, et la confirmation qu'aucun signal de mesure (15, 25) n'est reçu par la première et la seconde unité de réception (14, 24) dans la bande passante prédéfinie ; et
l'activation la première unité d'émission (11) pour émettre le premier signal radar (12) à la première fréquence prédéfinie et la confirmation que la seconde unité de réception (24) reçoit un signal de mesure (15, 25) avec une fréquence intermédiaire prédéfinie.
